(19) Europäisches Patentamt
European Patent Office
Office européen des brevets

(11) **EP 2 825 851 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(51) Int Cl.:
*G01D 5/14* (2006.01)     *G01P 3/488* (2006.01)
*B60T 8/171* (2006.01)

(21) Anmeldenummer: **13711594.5**

(22) Anmeldetag: **11.03.2013**

(86) Internationale Anmeldenummer:
**PCT/EP2013/054877**

(87) Internationale Veröffentlichungsnummer:
**WO 2013/135628 (19.09.2013 Gazette 2013/38)**

(54) **VORRICHTUNG UND VERFAHREN ZUR BESTIMMUNG EINER ABSOLUTEN WINKELPOSITION EINES RADES EINES FAHRZEUGS**

DEVICE AND METHOD FOR DETERMINING AN ABSOLUTE ANGULAR POSITION OF A WHEEL OF A VEHICLE

DISPOSITIF ET PROCÉDÉ POUR LA DÉTERMINATION D'UNE POSITION ANGULAIRE ABSOLUE D'UNE ROUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2012 DE 102012204141**

(43) Veröffentlichungstag der Anmeldung:
**21.01.2015 Patentblatt 2015/04**

(73) Patentinhaber: **Continental Automotive GmbH 30165 Hannover (DE)**

(72) Erfinder:
- **KRETSCHMANN, Matthias 93059 Regensburg (DE)**
- **FAISST, Holger 93161 Sinzing (DE)**
- **YAJIMA, Takeaki Tokyo 108-0073 (JP)**

(56) Entgegenhaltungen:
| | |
|---|---|
| EP-A1- 1 052 119 | EP-A1- 1 923 669 |
| WO-A1-2009/070065 | DE-A1-102004 053 696 |
| DE-A1-102008 049 046 | US-B1- 7 075 459 |

**Beschreibung**

Die vorliegende Erfindung betrifft eine Vorrichtung und ein Verfahren zur Bestimmung einer absoluten Winkelposition eines Rades. Eine solche Vorrichtung umfasst eine Messeinrichtung zum Erzeugen von jeweils einem Signal bei einer Drehung des Rades um einen vorherbestimmten Winkel und eine Zähleinrichtung zum Zählen der durch die Messeinrichtung erzeugten Signale. Dementsprechend erzeugt das Verfahren jeweils ein Signal bei einer Drehung des Rades um einen vorherbestimmten Winkel und zählt die erzeugten Signale.

Solche Mess- und Zähleinrichtungen sind aus dem Stand der Technik als Drehzahlsensoren bekannt, die beispielsweise im Rahmen eines Antiblockiersystems (ABS) oder einer Antischlupfregelung verwendet werden. Die DE 41 41 958 A1 beschreibt ein Beispiel eines solchen Drehzahlsensors. Ein Zahnrad dreht sich derartig, dass jedes seiner Zähne zunächst ein erstes Hall-Element und anschließend ein zweites Hall-Element passiert. Die Hall-Elemente geben Signale aus, die es ermöglichen, jeden vorbeilaufenden Zahn zu detektieren und entsprechend die Anzahl der vorbeilaufenden Zähne zu zählen. Auf dieser Basis kann eine Drehzahl eines mit dem Zahnrad verbundenen Rades eines Fahrzeugs bestimmt werden. Problematisch ist jedoch, dass auf diese Weise die Ermittlung einer absoluten Winkelposition des Rades nicht möglich ist.

DE 197 21 488 A1 erwähnt als eine Möglichkeit zur Lösung dieses Problems, dass ein Zahn des Zahnrades weggelassen werden könnte, um aufgrund einer Anormalität, die dadurch im Signalverlauf der Hall-Elemente entsteht, auf eine absolute Winkelposition des Zahnrades zu schließen. Die DE 197 21 488 A1 will jedoch ohne eine solche Markierung auskommen und schlägt vor, die aktuelle Position des Zahnrades ohne einen Referenzimpuls mittels Korrelationsanalyse zu bestimmen. Eine solche Korrelationsanalyse ist jedoch recht langsam, weil viele Umdrehungen benötigt werden, bis Rückschlüsse auf eine absolute Winkelposition des Zahnrades gezogen werden können.

Aus der DE 10 2004 053 696 A1 ist ein Reifendruckkontrollsystem für ein Kraftfahrzeug bekannt mit jeweils einem jeden Rad zugeordneten Reifendrucksensormodul und mit jeweils einer jedem Rad zugeordneten Einrichtung, die ein dem jeweiligen Reifendruck entsprechendes Signal an eine im Kraftfahrzeug stationäre Empfangseinrichtung sendet, mit einem im Kraftfahrzeug stationär angeordneten zentralen Steuergerät, welches die dem jeweiligen Reifendruck entsprechenden Signale empfängt und auswertet und welches zusätzlich die Signale von jedem drehenden Rad zugeordneter, ortsfest am Kraftfahrzeug angeordneter Drehzahlsensoren zugeführt erhält, wobei das Steuergerät aus den Signalen der Reifendrucksensormodule und den Signalen der Drehzahlsensoren die Anbaupositionen der Reifendrucksensormodule bestimmt, wobei die Reifendrucksensormodule als auch das zentrale Steuergerät Sende- und Empfangseinrichtungen zum gegenseitigen Datenaustausch aufweisen und wobei das zentrale Steuergerät ein mit der Periodizität von Raddrehzahlsignalen markiertes Signal an die Empfangseinrichtungen der Reifendrucksensormodule sendet und wobei die Reifendrucksensormodule die Empfangsfeldstärke des vom zentralen Steuergerät ausgesendeten Signals auswerten, indem sie den aufgrund der Raddrehung zeitlich variierenden Verlauf der Empfangsfeldstärke mit der Periodenzeit der im Empfangssignal enthaltenen Markierungen in Beziehung setzen.

Aus der WO 2009/070065 A1 ist eine Radüberwachungsvorrichtung zum Überwachen eines Betriebs eines Rades eines Fahrzeugs bekannt. Die Vorrichtung beinhaltet ein Sensormodul, das derart angebracht ist, dass es sich mit dem Rad mitbewegt.

Aus der EP 1 052 119 A1 ist ein Verfahren zur Durchführung der Zuordnung von Reifendruckkontrollvorrichtungen zu Radpositionen in einem Reifendruckkontrollsystem eines Kraftfahrzeuges bekannt. Jede Reifendruckkontrollvorrichtung sendet in zeitlichen Abständen ihre individuelle Kennung und ein verlängertes Hochfrequenzsignal an die Zentraleinheit des Reifendruckkontrollsystems. Die Hochfrequenzsignale weisen aufgrund der Geometrie des Radkastens und in Folge der Rotation des Rades einen vom Rotationswinkel des Rades und von der Zeit abhängigen individuellen Verlauf auf. In der Zentraleinheit wird aus zwei aufeinander folgenden Hochfrequenzsignalen jeweils ein Zeitpunkt festgelegt, zu dem das Rad, von dem aus die Signale gesendet wurden, jeweils die gleiche Winkelposition einnimmt. Zwischen den beiden Zeitpunkten hat das entsprechende Rad eine ganzzahlige Anzahl von Umdrehungen gemacht. In der Zentraleinheit wird mit Hilfe der Signale der Drehzahlsensoren die Radposition ermittelt, in der das Rad zwischen den beiden Zeitpunkten eine ganzzahlige Anzahl von Umdrehungen gemacht hat. Die entsprechende Radposition wird der von der Reifendruckkontrollvorrichtung übermittelten individuellen Kennung zugeordnet.

Aus der US 7 075 459 B1 ist ein Fahrzeuggeschwindigkeitssensor bekannt, wobei ein Transmitter an einem Rad des Fahrzeugs befestigt ist und bei jeder Umdrehung des Rads ein RF-Signal erzeugt.

Aus der EP 1 923 669 A1 ist ein Verfahren zum Datieren einer bemerkenswerten Winkelstellung mindestens eines von einem drehenden Luftreifen getragenen Sensors bezüglich eines externen Bezugssystems bekannt, wobei der Sensor eingerichtet ist, um Verformungen eines Teils des Luftreifens zu messen, wobei diese Verformungen beim Durchgang in der Nähe des Kontaktbereichs des Luftreifens bemerkenswert sind.

Aus der DE 10 2008 049 046 A1 sind eine Vorrichtung und ein Verfahren zur Bestimmung einer absoluten Winkelposition eines Rades eines Fahrzeuges gemäß dem jeweiligen Oberbegriff der Ansprüche 1 und 9 bekannt.

Ausgehend vom Stand der Technik ist es eine Aufgabe der vorliegenden Erfindung, eine Vorrichtung und ein entsprechendes Verfahren anzugeben, die eine schnelle und sichere Bestimmung einer absoluten Winkelposition eines Rades eines Fahrzeuges ermöglichen.

Erfindungsgemäß wird diese Aufgabe durch die Gegenstände der unabhängigen Patentansprüche gelöst. Die abhängigen Patentansprüche geben Ausführungsformen der Erfindung an.

Dementsprechend umfasst die Erfindung eine Vorrichtung zur Bestimmung einer absoluten Winkelposition eines Rades eines Fahrzeuges mit einer radseitig montierbaren Radeinheit, die dazu eingerichtet ist, Daten zu ermitteln, die eine Bestimmung eines Bezugsschenkels des Rades ermöglichen, und die ermittelten Daten drahtlos zu übertragen. Die Vorrichtung weist eine fahrzeugseitig montierbare Empfangseinheit zum Empfangen der Daten der Radeinheit auf. Eine Bezugsschenkelbestimmungseinrichtung kann aufgrund der empfangenen Daten den Bezugsschenkel bestimmen. Zusätzlich umfasst die erfindungsgemäße Vorrichtung eine Messeinrichtung zum Erzeugen von jeweils einem Signal bei einer Drehung des Rades um einen vorherbestimmten Winkel und eine Zähleinrichtung zum Zählen der durch die Messeinrichtung erzeugten Signale. Eine solche Messeinrichtung kann beispielsweise ein Drehelement eines ABS-Sensors aufweisen, das sich synchron mit dem Rad dreht. Eine Winkelbestimmungseinrichtung kann dann aufgrund der durch die Zähleinrichtung gezählten Signale und des bestimmten Bezugsschenkels eine absolute Winkelposition des Rades bestimmen.

Diese erfindungsgemäße Vorrichtung ermöglicht nicht nur die Bestimmung einer absoluten Winkelposition eines Zahnrades, sondern auch die Bestimmung einer absoluten Winkelposition eines Fahrzeugrades. Gemäß der DE 197 21 488 A1 sind diese beiden absoluten Winkelpositionen nur dann identisch, wenn bei der Montage eines Fahrzeugrades exakt darauf geachtet wird, wie das Fahrzeugrad montiert wird. Zumeist erfolgt die Befestigung mittels fünf Schrauben, so dass jeweils eine Verdrehung des Fahrzeugrades zum Zahnrad um 72 Grad möglich ist. Da die Radeinheit direkt am Rad montiert werden kann, sind die von ihr bereitgestellten Daten unabhängig von einer Montageposition am Fahrzeug.

Bei einer Ausführungsform ist die Vorrichtung dazu eingerichtet, Daten über eine Geschwindigkeit des Fahrzeugs zu empfangen oder zu ermitteln, und die Bezugsschenkelbestimmungseinrichtung ist dazu eingerichtet, den Bezugsschenkel des Rades zu bestimmen, wenn sich die Geschwindigkeit von einem unter einem vorherbestimmten Grenzwert liegenden Wert auf einen über dem Grenzwert liegenden Wert ändert.

Diese Ausführungsform ist vorteilhaft, weil aus dem Stand der Technik bekannte Mess- und Zähleinrichtungen bei geringen Geschwindigkeiten oftmals falsche Werte liefern. Dies hängt einerseits damit zusammen, dass die Signale der Hall-Elemente abgetastet werden und Impulse oftmals ignoriert werden, wenn diese nicht vollständig in ein vorgegebenes Zeitintervall fallen. Andererseits ist eine in das Hall-Element induzierte Spannung bei einer geringen Drehgeschwindigkeit des Zahnrades oftmals sehr klein und daher nicht mehr mess- und auswertbar. Ein weiteres Problem besteht darin, dass ein Fahrzeug durchaus rückwärtsfahren kann und in diesem Falle die von der Messeinrichtung erzeugten Signale subtrahiert, statt addiert werden müssten. Daher ist es sinnvoll, den Bezugsschenkel des Rades neu zu bestimmen, wenn sich die Geschwindigkeit des Fahrzeuges von einem unter einem vorherbestimmten Grenzwert liegenden Wert auf einen über dem Grenzwert liegenden Wert ändert. Dabei sollte der Grenzwert so gewählt werden, dass bei Geschwindigkeiten oberhalb des Grenzwertes Signale verlässlich erzeugt und gezählt werden. Durch die erneute Bestimmung des Bezugsschenkels wird sichergestellt, dass die absolute Winkelposition des Rades wieder richtig bestimmt wird.

Die Radeinheit kann einen Beschleunigungssensor umfassen und dazu eingerichtet sein, die Daten aufgrund einer auf den Beschleunigungssensor wirkenden Erdgravitation, einer beim Eintritt des Beschleunigungssensors in einen Latsch des Rades entstehenden Beschleunigung oder einer beim Austritt des Beschleunigungssensors aus dem Latsch des Rades entstehenden Beschleunigung zu ermitteln. Dabei soll im Sinne der vorliegenden Patentanmeldung der Begriff Beschleunigungssensor ebenfalls einen Schocksensor umfassen.

Auf einen an der Felge oder am Reifen montierten Beschleunigungssensor wirkt bei einer Drehung des Rades eine Zentrifugalkraft. Diese wird überlagert durch die Erdgravitation, aufgrund derer eine absolute Winkelposition des Beschleunigungssensors und damit des Rades bestimmt werden kann. Der Latsch des Rades wird auch als Reifenaufstandsfläche bezeichnet. Diese Reifenaufstandsfläche ist im Wesentlichen gerade und nicht bogenförmig, wie der Rest des Rades, so dass sich beim Eintritt und beim Austritt des Beschleunigungssensors in den Latsch eine Veränderung der Beschleunigung ergibt.

Zusätzlich oder alternativ kann die Radeinheit ein Piezoelement umfassen, das beispielsweise in den Reifen einvulkanisiert oder an der Reifeninnenseite befestigt ist. Die Radeinheit kann dazu eingerichtet sein, die Daten aufgrund einer beim Eintritt des Piezoelements in den Latsch des Rades entstehenden Veränderung einer Biegung des Piezoelements oder einer beim Austritt des Piezoelements aus dem Latsch des Rades entstehenden Veränderung der Biegung des Piezoelements zu ermitteln. Ein Piezoelement ist ein recht einfaches, kostengünstiges und robustes Element, um benötigte Messwerte bereitzustellen.

In einer Ausführungsform umfasst die Radeinheit einen Magnetfeldsensor und ist dazu eingerichtet, die Daten aufgrund eines auf den Magnetfeldsensor wirkenden Erdmagnetfeldes zu ermitteln. Ein solcher Magnetfeldsensor ist im Vergleich zu einem Beschleunigungssensor unabhängig von etwaigen Beschleunigungs- und Bremsvorgängen des Fahrzeugs.

Die Radeinheit kann eine Auswerteeinheit umfassen, die dazu eingerichtet ist, Ausgangssignale eines Sensors (wie z.B. des Beschleunigungssensors, des Piezoelements oder des Magnetfeldsensors) der Radeinheit abzutasten, um abgetastete Signale zu erzeugen, und die abgetasteten Signale zu analysieren, um einen Durchlauf des Rades durch den Bezugsschenkel zu erkennen. Eine solche Auswerteeinheit könnte beispielsweise den Signalverlauf des Beschleunigungssensors abtasten, den durch die Zentrifugalkraft zu erklärenden Anteil des Signals heraus rechnen, so dass im Wesentlichen nur noch der Einfluss des Erdgravitationsfeldes verbleibt, und im verbleibenden Signalverlauf die Maxima bzw. Minima bestimmen, um so den Durchlauf des Rades durch den Bezugsschenkel zu erkennen. Es kann auch eine ereignisgesteuerte Auswertung der Ausgangssignale des Sensors der Radeinheit vorgesehen sein. Beispielsweise kann die Auswerteeinheit schlafen und jeweils durch einen Spannungspuls des Piezoelements aufgeweckt werden, der beim Ein- oder Austritt des Piezoelements in bzw. aus dem Latsch entsteht. Eine solche ereignisgesteuerte Auswertung, bei der die Auswerteeinheit zwischen den Ereignissen schläft, ist besonders energiesparend.

In einer Ausführungsform ist die Radeinheit dazu eingerichtet, die Daten im Wesentlichen zu einem Zeitpunkt zu übertragen, zu dem das Rad den Bezugsschenkel durchläuft. Fahrzeugseitig kann dann aufgrund des Empfangszeitpunkts darauf geschlossen werden, wann das Rad den Bezugsschenkel durchlaufen hat. Problematisch kann hierbei jedoch sein, dass eine Verbindungsstrecke zwischen der Radeinheit und der Empfangseinheit möglicherweise gerade dann besonders schlecht ist, dass sozusagen ein sogenannter "Black spot" vorliegt, wenn die Radeinheit den Bezugsschenkel durchläuft.

In einer anderen Ausführungsform ist die Radeinheit dazu eingerichtet, den Zeitpunkt zu ermitteln, zu dem das Rad den Bezugsschenkel durchläuft, und den ermittelten Zeitpunkt im Rahmen der Daten zu übertragen. Diese Variante kann den Übertragungszeitpunkt, zu dem die Daten übertragen werden, relativ frei bestimmen, so dass eine Übertragung in einem "Black spot" vermieden werden kann. Die Variante erfordert jedoch eine Uhrensynchronisation zwischen der Radeinheit und der Fahrzeugseite.

Weiterhin umfasst die vorliegende Erfindung ein Verfahren zur Bestimmung einer absoluten Winkelposition eines Rades eines Fahrzeuges. Bei diesem Verfahren werden durch eine radseitig montierbare Radeinheit Daten ermittelt, die eine Bestimmung eines Bezugsschenkels des Rades ermöglichen. Die ermittelten Daten werden von der Radeinheit an eine fahrzeugseitig montierbare Empfangseinheit drahtlos übertragen. Aufgrund der übertragenen Daten wird dann der Bezugsschenkel des Rades bestimmt. Bei einer Drehung des Rades um einen vorherbestimmten Winkel wird jeweils ein Signal erzeugt und die erzeugten Signale gezählt. Aufgrund der gezählten erzeugten Signale und des bestimmten Bezugsschenkels wird eine absolute Winkelposition des Rades bestimmt.

Vorzugsweise werden dabei Daten ermittelt und übertragen, die eine Bestimmung des Bezugsschenkels des Rades ermöglichen, und ein entsprechender Bezugsschenkel des Rades aufgrund dieser Daten bestimmt, wenn sich eine Geschwindigkeit des Fahrzeugs von einem unter einem vorherbestimmten Grenzwert liegenden Wert auf einen über dem Grenzwert liegenden Wert ändert.

Die Merkmale der Erfindung wurden mit Bezug auf eine Vorrichtung und/oder mit Bezug auf ein Verfahren beschrieben. Sofern nicht explizit anders angegeben, können die Vorrichtungsmerkmale auch entsprechend auf das Verfahren angewendet werden. Die Erfindung sieht also für Ausführungsformen des Verfahrens entsprechende Schritte vor, um das zu tun, wofür die Vorrichtungselemente eingerichtet sind. Somit kann das erfindungsgemäße Verfahren natürlich den Schritt umfassen Ermitteln der Daten aufgrund einer auf den Beschleunigungssensor wirkenden Erdgravitation. Genauso umfasst das erfindungsgemäße Verfahren in einer Ausführungsform den Schritt Ermitteln der Daten aufgrund einer beim Eintritt des Piezoelements in einen Latsch des Rades entstehenden Veränderung einer Biegung des Piezoelements.

Weitere Vorteile und Details der vorliegenden Erfindung sollen im Weiteren mit Bezug auf die in den Figuren dargestellten Ausführungsformen erläutert werden.

Dabei zeigen:

Figur 1      einen Drehzahlsensor nach dem Stand der Technik;

Figur 2      einen Geschwindigkeitsverlauf eines Fahrzeugs zur Erläuterung von Problemen des Drehzahlsensors nach Figur 1;

Figur 3      eine Ausführungsform einer erfindungsgemäßen Vorrichtung zur Bestimmung einer absoluten Winkelposition eines Rades;

Figur 4      die Radeinheit aus Figur 3 im Detail;

Figur 5      zwei mögliche Montagepositionen für eine Radeinheit;

Figur 6      einen Signalverlauf eines Beschleunigungssensors und

Figur 7      eine Ausführungsform eines erfindungsgemäßen Verfahrens zur Bestimmung einer absoluten Winkelposition eines Rades.

In der nachfolgenden Beschreibung werden gleiche und gleichwirkende Elemente, sofern nichts anderes angegeben ist, mit denselben Bezugszeichen benannt.

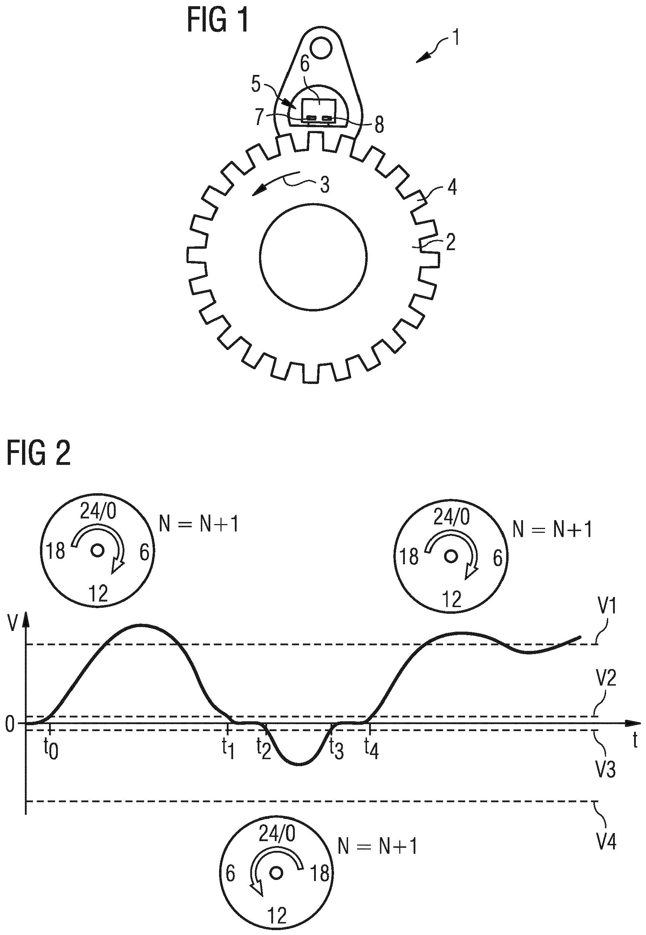

Figur 1 gibt den in der DE 41 41 958 A1 beschriebenen Drehzahlsensor 1 wieder. Ein Zahnrad 2 dreht sich synchron mit einem nicht gezeigten Fahrzeugrad in Richtung des Pfeils 3. Dabei bewegen sich die Zähne 4 des Zahnrades 2 an einem Hall-Sensor 5 vorbei. Der Hall-Sensor 5 umfasst einen Magneten 6 und zwei Hall-Elemente 7, 8, die jeweils einen Spannungspuls erzeugen, wenn sich ein Zahn 4 an ihnen vorbei bewegt. Da das Zahnrad 2 insgesamt 24 Zähne aufweist, kann davon ausgegangen werden, dass nach 24 Spannungspulsen das Zahnrad 2 eine vollständige Umdrehung vollzogen hat. Natürlich wäre auch eine andere Anzahl von Zähnen denkbar. In der folgenden Formel soll die Anzahl von Spannungspulsen, die einer kompletten Radumdrehung entsprechen mit N bezeichnet werden. Die Spannungspulse werden gezählt und die Anzahl der gezählten Spannungspulse sei mit M bezeichnet. I gibt eine Anfangsposition des Zahnrades 2 an. Mit Hilfe dieser Parameter kann die absolute Winkelposition P des Zahnrades 2 mit der folgenden Gleichung bestimmt werden:

$$P = MOD(M+I, N)/N*360°$$

Problematisch an dieser Formel ist jedoch, dass die Anfangsposition I nicht bekannt ist. Darüber hinaus stellen gewisse Fahrsituationen ein Problem für einen verlässlichen Zählprozess der Spannungspulse dar. Die Figur 2 zeigt den Verlauf einer Geschwindigkeit eines Fahrzeugs über die Zeit, um diese Probleme zu verdeutlichen. Zur Erläuterung der auftretenden Phänomene sind vier gestrichelte Geschwindigkeitslinien V1 bis V4 eingezeichnet. V1 entspricht einer Geschwindigkeit von 25 km/h, V2 einer Geschwindigkeit von 2 km/h, V3 einer Geschwindigkeit von -2 km/h und V4 einer Geschwindigkeit von -25 km/h, wobei ein negatives Vorzeichen eine Rückwärtsfahrt angibt. Die oberhalb und unterhalb der Geschwindigkeitskurve angegebenen Pfeile in Kreisen verdeutlichen die Drehrichtung des Zahnrades 2. Die daneben stehende Formel N=N+1 symbolisiert, dass die Spannungspulse aufaddiert werden. In den Kreisen sind Zahlen zu sehen, denen zu entnehmen ist, dass beim Bezugsschenkel mit Null angefangen wird, nach einer Drehung um 90° sechs Spannungspulse, nach einer Drehung um 180° zwölf Spannungspulse, nach einer Drehung um 270° achtzehn Spannungspulse und nach einer Drehung um 360° vierundzwanzig Spannungspulse gezählt wurden. Natürlich würden sich diese Zahlen ändern, wenn das Zahnrad eine andere Anzahl von Zähnen als 24 aufweist.

Wenn sich das Zahnrad 2 recht langsam dreht, wie es beispielsweise bei Geschwindigkeiten zwischen V2 und V3 der Fall ist, bewegen sich die Zähne 4 des Zahnrades 2 derartig langsam am Hall-Sensor 5 vorbei, dass die durch sie induzierte Spannung sehr gering ist und dementsprechend keine Spannungspulse detektiert werden können. Darüber hinaus wird das Signal des Hall-Sensors 5 in der Regel abgetastet und Spannungspulse, die in mehr als ein Zeitintervall fallen, werden unter Umständen ignoriert. Das heißt, dass wahrscheinlich erst ab dem Zeitpunkt t0 der Drehzahlsensor 1 die Spannungspulse korrekt aufsummiert. Zum Zeitpunkt t1 fällt die Fahrzeuggeschwindigkeit wiederum unter die Geschwindigkeit V2, wodurch es zu Fehlern beim Zählen kommen kann. Zum Zeitpunkt t2 fährt das Fahrzeug rückwärts. Die Geschwindigkeit würde eine korrekte Zählung der Spannungspulse ermöglichen, zumeist sind die gebräuchlichen Drehzahlsensoren jedoch nicht dafür eingerichtet, bei Rückwärtsfahrten die Spannungspulse zu subtrahieren, anstatt mit der Addition fortzufahren. Daher wird zwischen den Zeitpunkten t2 und t3 falsch gezählt, weil die Spannungspulse weiterhin addiert werden, anstatt sie zu subtrahieren. Zum Zeitpunkt t4 könnte wieder korrekt gezählt werden, es müsste jedoch die Anfangsposition I neu ermittelt werden, um die Falschzählungen, die zwischen den Zeitpunkten t1 und t4 vorgenommen wurden, zu eliminieren.

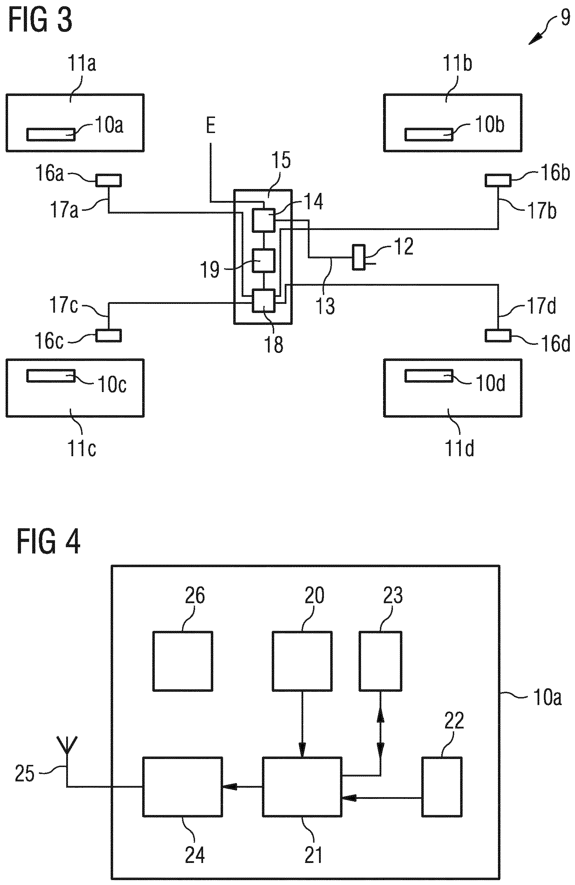

Figur 3 zeigt eine Ausführungsform einer erfindungsgemäßen Vorrichtung zur Bestimmung einer absoluten Winkelposition eines Rades eines Fahrzeugs. Die Vorrichtung 9 umfasst vier Radeinheiten 10a, 10b, 10c, 10d, die jeweils dazu eingerichtet sind, Daten zu ermitteln, die eine Bestimmung eines Bezugsschenkels des Rades ermöglichen, dem die Radeinheiten zugeordnet sind, und die ermittelten Daten drahtlos zu übertragen. Die vier Radeinheiten 10a, 10b, 10c, 10d sind an entsprechenden Rädern 11a, 11b, 11c, 11d des Fahrzeugs montiert. Auf der Fahrzeugseite befindet sich eine Empfangseinheit 12 zum Empfangen der Daten, die von den Radeinheiten 10a bis 10d ausgesendet werden. Über eine Leitung 13 leitet die Empfangseinheit 12 die empfangenen Daten an eine Bezugsschenkelbestimmungseinrichtung 14 weiter. Diese ist Bestandteil einer Fahrzeugelektronik 15. In der Nähe der Räder 11a bis 11d sind darüber hinaus fahrzeugseitig vier Messeinrichtungen 16a, 16b, 16c, 16d vorgesehen, die bei einer Drehung des ihnen zugeordneten Rades um einen vorherbestimmten Winkel jeweils ein Signal erzeugen. Über entsprechende Leitungen 17a, 17b, 17c, 17d übertragen die Messeinrichtungen die von ihnen erzeugten Signale an eine zentrale Zähleinrichtung 18, die die durch die Messeinrichtungen 16a bis 16d erzeugten Signale zählt.

Die Fahrzeugelektronik 15 erhält von außen ein Eingangssignal E, das Daten enthält, die Aufschluss auf die Geschwindigkeit des Fahrzeugs geben. Beispielsweise kann an einer Ausgangsseite des Getriebes ein Sensor angeordnet sein, aus dessen Daten auf die Geschwindigkeit geschlossen werden kann. Das Eingangssignal E wird an die Bezugsschenkelbestimmungseinrichtung 14 weitergeleitet, die den Bezugsschenkel des Rades bestimmt, wenn sich die Geschwindigkeit von einem unter einem vorherbestimmten Grenzwert liegenden Wert auf einen über dem Grenzwert liegenden Wert ändert. Alternativ könnte die Bezugsschenkelbestimmungseinrichtung 14 auch die Daten der vier Messeinrichtungen 16a, 16b, 16c, 16d auswerten, um daraus die Geschwindigkeit des Fahrzeugs zu ermitteln.

Eine Winkelbestimmungseinrichtung 19 ist mit der Bezugsschenkelbestimmungseinrichtung 14 und der Zähleinrichtung 18 verbunden und bestimmt aufgrund der durch die Zähleinrichtung gezählten Signale und der durch die Bezugsschenkelbestimmungseinrichtung bestimmten Bezugsschenkel jedes Rades eine absolute Winkelposition der Räder 11a bis 11d.

In der Figur 4 ist eine der in Figur 3 gezeigten Radeinheiten 10a noch einmal im Detail dargestellt. Die Radeinheit 10a gehört vorliegend zu einem Reifendruckkontrollsystem und weist daher einen Drucksensor 20 auf. Dieser übermittelt seine Daten an eine Auswerteeinheit 21. Darüber hinaus umfasst die Radeinheit einen Beschleunigungssensor 22, der seine Daten ebenfalls an die Auswerteeinheit 21 überträgt. Die Auswerteeinheit 21 steht mit einem Speicher 23 im Kontakt und kann über eine Sendeeinheit 24 und eine entsprechende Antenne 25 seine Daten an die fahrzeugseitige Empfangseinheit 12 übertragen. Eine Batterie 26 versorgt die Radeinheit 10a mit der benötigten Energie.

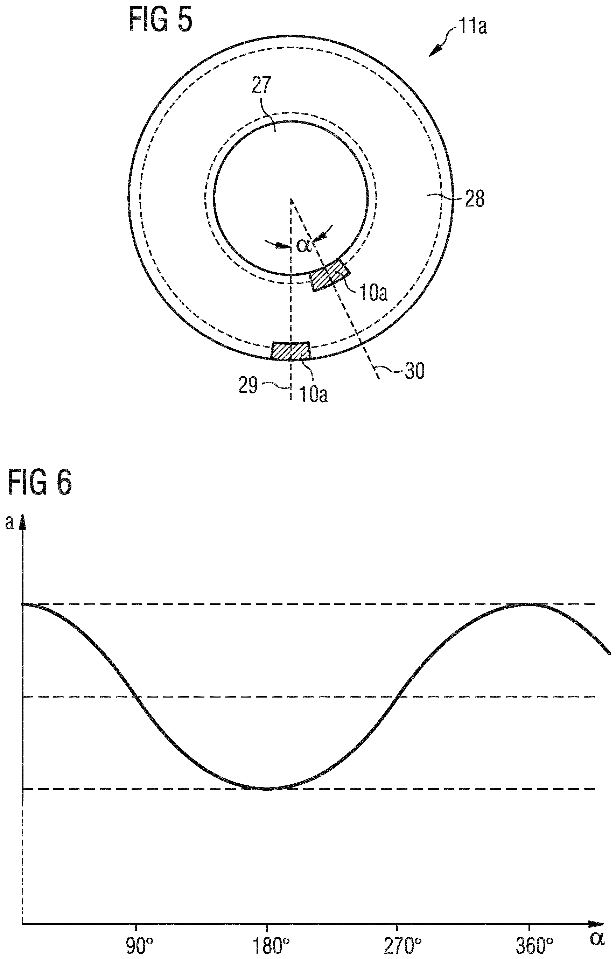

Die Figur 5 illustriert noch einmal das in Figur 3 gezeigte Rad 11a, um zwei denkbare Anordnungspunkte der Radeinheit 10a an diesem Rad zu verdeutlichen. Das Rad 11a umfasst eine Felge 27 und einen auf die Felge 27 aufgezogenen Reifen 28. Die Radeinheit 10a kann nun beispielsweise an der Felge angeordnet sein, z. B. mittels eines Stahlbandes, das um die Felge herum reicht, oder sie kann an die Innenseite des Reifens 28 angeklebt oder in den Reifen einvulkanisiert sein. Darüber hinaus kann die Radeinheit einfach am Ventil angeordnet sein. Zusätzlich ist in Figur 5 ein möglicher Bezugsschenkel 29 eingezeichnet. Der Schenkel 30, auf dem sich die an der Felge angeordnete Radeinheit befindet, steht zu diesem Bezugsschenkel in einem Winkel α.

In der Figur 6 ist die Beschleunigung verdeutlicht, die auf den Beschleunigungssensor bei einer Drehung des Rades wirkt. Auf der Abszisse ist der Winkel α und auf der Ordinate die Beschleunigung abgetragen. Die Beschleunigung besteht im Wesentlichen aus einer Komponente, die von der Zentrifugalkraft herrührt, und einer weiteren Komponente, die durch die Erdgravitation verursacht wird. Wenn sich der Beschleunigungssensor auf dem Bezugsschenkel 29 befindet, so wirken die Zentrifugalkraft und die Erdgravitation exakt in dieselbe Richtung, so dass die Beschleunigung ihren maximalen Wert annimmt. Bei einem Winkel von 180° wirkt die Erdgravitation der Zentrifugalkraft entgegen, so dass sich hier die minimale Beschleunigung ergibt. Somit kann aufgrund der Beschleunigungskräfte, die auf den Beschleunigungssensor wirken, ermittelt werden, wann die Radeinheit 10a den Bezugsschenkel 29 durchläuft.

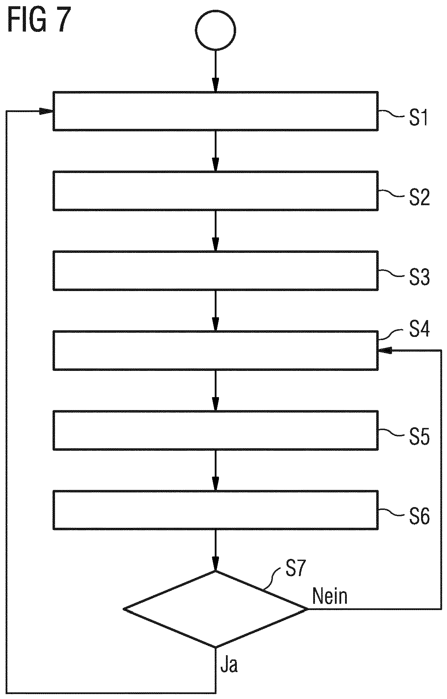

Die Figur 7 zeigt eine Ausführungsform eines erfindungsgemäßen Verfahrens zur Bestimmung einer absoluten Winkelposition eines Rades eines Fahrzeugs. In Schritt S1 werden durch die radseitig montierbare Radeinheit Daten ermittelt, die eine Bestimmung eines Bezugsschenkels des Rades ermöglichen. Diese Daten werden in Schritt S2 von der Radeinheit an eine fahr-zeugseitig montierbare Empfangseinheit drahtlos über-tragen. In Schritt S3 wird dann aufgrund der übertragenen Daten der Bezugsschenkel des Rades bestimmt. Beispielsweise kann die Radeinheit im Wesentlichen zu dem Zeitpunkt Daten übertragen, zu dem das Rad 11a den Bezugsschenkel 29 durchläuft. Die Empfangseinrichtung 12 ermittelt den Zeitpunkt, zu dem sie diese Daten empfängt, und ermittelt in welchem Zustand sich die Messeinrichtung 16a zu diesem Zeitpunkt befand, um so die Anfangsposition I zu bestimmen. Mit anderen Worten merkt sich die Vorrichtung, welcher Zahn gerade am Hall-Sensor der Messeinrichtung 16a vorbei lief, als die Radeinheit 10a den Bezugsschenkel 29 passierte.

Alternativ kann die Radeinheit den Zeitpunkt ermitteln, zu dem das Rad 11a den Bezugsschenkel durchläuft, und den ermittelten Zeitpunkt im Rahmen der Daten übertragen. Die Fahrzeugelektronik 15 hat Zugang zu einer Uhr, die mit einer Uhr der Radeinheit 10a synchronisiert ist, und ist fähig, aufgrund der übertragenen Daten den Zustand der Messeinrichtung 16a zum übertragenen Zeitpunkt zu ermitteln. Auf diese Weise kann ebenfalls die Anfangsposition I ermittelt werden.

In Schritt S4 des in Figur 7 gezeigten Verfahrens erzeugt die Messeinrichtung jeweils ein Signal bei einer Drehung des Rades um einen vorherbestimmten Winkel. Die erzeugten Signale werden in Schritt S5 gezählt. In Schritt S6 wird dann eine absolute Winkelposition des Rades aufgrund der erzeugten Signale und des bestimmten Bezugsschenkels ermittelt. In Schritt S7 wird geprüft, ob sich die Geschwindigkeit des Fahrzeugs von einem unter einem vorherbestimmten Grenzwert liegenden Wert auf einen über dem Grenzwert liegenden Wert geändert hat. Ist dies der Fall, so wird zu Schritt S1 verzweigt. Anderenfalls ist keine erneute Synchronisation notwendig und es wird zu Schritt S4 verzweigt.

Die mit Bezug auf die Figuren gemachten Erläuterungen sind rein illustrativ und nicht beschränkend zu verstehen. An den gezeigten Ausführungsformen können viele Änderungen vorgenommen werden, ohne den Schutzbereich, wie er in den beigefügten Ansprüchen festgelegt ist, zu verlassen.

Bezugszeichenliste

| 1 | Drehzahlsensor nach dem Stand der Technik |
|---|---|
| 2 | Zahnrad |
| 3 | eine denkbar Drehrichtung |
| 4 | Zahn |
| 5 | Hall-Sensor |
| 6 | Magnet |
| 7 | erstes Hall-Element |
| 8 | zweites Hall-Element |
| 9 | Ausführungsform einer erfindungsgemäßen Vorrichtung zur Bestimmung einer absoluten |

| | Winkelposition |
|---|---|
| 10a-10d | Radeinheit |
| 11a-11d | Rad |
| 12 | Empfangseinheit |
| 13 | Leitung |
| 14 | Bezugsschenkelbestimmungseinrichtung |
| 15 | Fahrzeugelektronik |
| 16a-16d | Messeinrichtung |
| 17a-17d | Leitung |
| 18 | Zähleinrichtung |
| 19 | Winkelbestimmungseinrichtung |
| 20 | Drucksensor |
| 21 | Auswerteeinheit |
| 22 | Beschleunigungssensor |
| 23 | Speicher |
| 24 | Sendeeinheit |
| 25 | Antenne |
| 26 | Batterie |
| 27 | Felge |
| 28 | Reifen |
| 29 | Bezugsschenkel |
| 30 | Schenkel |
| α | Winkel |
| S1 | Ermitteln von Daten, die eine Bestimmung des Bezugsschenkels des Rades ermöglichen |
| S2 | Übertragen der ermittelten Daten |
| S3 | Bestimmen des Bezugsschenkel des Rades aufgrund der übertragenen Daten |
| S4 | Erzeugen von jeweils einem Signal bei einer Drehung des Rades um einen vorherbestimmten Winkel |
| S5 | Zählen der erzeugten Signale |
| S6 | Bestimmen einer absoluten Winkelposition des Rades |
| S7 | Änderung der Geschwindigkeit des Fahrzeugs von einem unter einem vorherbestimmten Grenzwert liegenden Wert auf einen über dem Grenzwert liegenden Wert? |
| t0-t4 | Zeitpunkte |
| V1 | 25 km/h |
| V2 | 2 km/h |
| V3 | -2 km/h |
| V4 | -25 km/h |

**Patentansprüche**

1. Vorrichtung (9) zur Bestimmung einer absoluten Winkelposition eines Rades (11a - 11d) eines Fahrzeugs mit

    - einer radseitig montierbaren Radeinheit (10a - 10d), die dazu eingerichtet ist, Daten zu ermitteln, die eine Bestimmung eines Bezugsschenkels (29) des Rades ermöglichen, und die ermittelten Daten drahtlos zu übertragen,
    - einer fahrzeugseitig montierbaren Empfangseinheit (12) zum Empfangen der Daten der Radeinheit,
    - einer fahrzeugseitigen Messeinrichtung (16a - 16d) zum Erzeugen von jeweils einem Signal bei einer Drehung des Rades um einen vorherbestimmten Winkel,
    - einer Zähleinrichtung (18) zum Zählen der durch die Messeinrichtung erzeugten Signale, **gekennzeichnet durch**
    - eine Bezugsschenkelbestimmungseinrichtung (14) zum Bestimmen des Bezugsschenkels des Rades aufgrund der empfangenen Daten und
    - eine Winkelbestimmungseinrichtung (19) zum Bestimmen einer absoluten Winkelposition des Rades aufgrund der durch die Zähleinrichtung (18) gezählten Signale und des bestimmten Bezugsschenkels, wobei die Zähleinrichtung (18), die Bezugsschenkelbestimmungseinrichtung (14) und die Winkelbestimmungseinrichtung (19) Bestandteil einer Fahrzeugelektronik (15) sind.

2. Vorrichtung nach Anspruch 1, wobei die Vorrichtung dazu eingerichtet ist, Daten über eine Geschwindigkeit des Fahrzeugs zu empfangen oder zu ermitteln, und die Bezugsschenkelbestimmungseinrichtung (14) dazu eingerichtet ist, den Bezugsschenkel des Rades zu bestimmen, wenn sich die Geschwindigkeit von einem unter einem vorherbestimmten Grenzwert (V2) liegenden Wert auf einen über dem Grenzwert (V2) liegenden Wert ändert.

3. Vorrichtung nach Anspruch 1 oder 2, wobei die Radeinheit (10a - 10d) einen Beschleunigungssensor (22) umfasst und dazu eingerichtet ist, die Daten aufgrund

    - einer auf den Beschleunigungssensor wirkenden Erdgravitation,
    - einer beim Eintritt des Beschleunigungssensors in einen Latsch des Rades entstehenden Beschleunigung oder
    - einer beim Austritt des Beschleunigungssensors aus dem Latsch des Rades entstehenden Beschleunigung
    zu ermitteln.

4. Vorrichtung nach Anspruch 1 oder 2, wobei die Radeinheit (10a - 10d) ein Piezoelement umfasst und dazu eingerichtet ist, die Daten aufgrund

    - einer beim Eintritt des Piezoelements in einen Latsch des Rades entstehenden Veränderung einer Biegung des Piezoelements oder
    - einer beim Austritt des Piezoelements aus dem Latsch des Rades entstehenden Veränderung der Biegung des Piezoelements zu ermitteln.

**5.** Vorrichtung nach Anspruch 1 oder 2, wobei die Radeinheit (10a - 10d) einen Magnetfeldsensor umfasst und dazu eingerichtet ist, die Daten aufgrund eines auf den Magnetfeldsensor wirkenden Erdmagnetfeldes zu ermitteln.

**6.** Vorrichtung nach einem der vorhergehenden Ansprüche, wobei die Radeinheit (10a - 10d) eine Auswerteeinheit (21) umfasst, die dazu eingerichtet ist, Ausgangssignale eines Sensors, insbesondere des Beschleunigungssensors, der Radeinheit abzutasten, um abgetastete Signale zu erzeugen, und die abgetasteten Signale zu analysieren, um einen Durchlauf des Rades durch den Bezugsschenkel (29) zu erkennen.

**7.** Vorrichtung nach Anspruch 6, wobei die Radeinheit (10a - 10d) dazu eingerichtet ist, die Daten im Wesentlichen zu einem Zeitpunkt zu übertragen, zu dem das Rad den Bezugsschenkel (29) durchläuft, oder den Zeitpunkt, zu dem das Rad den Bezugsschenkel (29) durchläuft, zu ermitteln und den ermittelten Zeitpunkt im Rahmen der Daten zu übertragen.

**8.** Vorrichtung nach einem der vorhergehenden Ansprüche, wobei die Messeinrichtung ein Drehelement eines ABS-Sensors aufweist, das sich synchron mit dem Rad dreht.

**9.** Verfahren zur Bestimmung einer absoluten Winkelposition eines Rades eines Fahrzeugs mit den Schritten

- (a) Ermitteln von Daten (S1), die eine Bestimmung eines Bezugsschenkels des Rades ermöglichen, durch eine radseitig montierbare Radeinheit,
- (b) drahtloses Übertragen (S2) der ermittelten Daten von der Radeinheit an eine fahrzeugseitig montierbare Empfangseinheit,
- (c) Bestimmen des Bezugsschenkels (S3) des Rades aufgrund der übertragenen Daten,
- (d) Erzeugen von jeweils einem Signal bei einer Drehung des Rades um einen vorherbestimmten Winkel (S4),
- (e) Zählen der erzeugten Signale (S5) und
- (f) Bestimmen einer absoluten Winkelposition des Rades (S6) aufgrund der gezählten erzeugten Signale und des bestimmten Bezugsschenkels.

**10.** Verfahren nach Anspruch 9, wobei die Schritte (a) bis (c) ausgeführt werden, wenn sich eine Geschwindigkeit des Fahrzeugs von einem unter einem vorherbestimmten Grenzwert (V2) liegenden Wert auf einen über dem Grenzwert (V2) liegenden Wert ändert.

**Claims**

**1.** Device (9) for determining an absolute angular position of a wheel (11a - 11d) of a vehicle, comprising

- a wheel unit (10a - 10d) which can be mounted on the wheel side and is configured to acquire data which permit a reference limb (29) of the wheel to be determined, and to transmit the acquired data in a wireless fashion,
- a receiver unit (12) which can be mounted on the vehicle side and has the purpose of receiving the data of the wheel unit,
- a vehicle-side measuring device (16a - 16d) for generating in each case one signal when the wheel rotates by a previously determined angle,
- a counting device (18) for counting the signals generated by the measuring device, **characterized by**
- a reference limb-determining device (14) for determining the reference limb of the wheel on the basis of the received data, and
- an angle-determining device (19) for determining an absolute angular position of the wheel on the basis of the signals counted by the counting device (18) and the determined reference limb, wherein the counting device (18), the reference limb-determining device (14) and the angle-determining device (19) are components of a vehicle electronics (15).

**2.** Device according to Claim 1, wherein the device is configured to receive or acquire data relating to a speed of the vehicle, and the reference limb-determining device (14) is configured to determine the reference limb of the wheel if the speed changes from a value below a previously determined limiting value (V2) to a value above the limiting value (V2).

**3.** Device according to Claim 1 or 2, wherein the wheel unit (10a - 10d) comprises an acceleration sensor (22) and is configured to acquire the data on the basis

- of a gravity of the earth acting on the acceleration sensor,
- acceleration occurring when the acceleration sensor enters a contact area of the wheel, or
- acceleration occurring when the acceleration sensor exits the contact area of the wheel.

**4.** Device according to Claim 1 or 2, wherein the wheel unit (10a - 10d) comprises a piezo-element and is configured to acquire the data on the basis

- of a change in bending of the piezo-element occurring when the piezo-element enters the contact area of the wheel, or
- a change in the bending of the piezo-element occurring when the piezo-element exits the contact area of the wheel.

5. Device according to Claim 1 or 2, wherein the wheel unit (10a - 10d) comprises a magnetic field sensor and is configured to acquire the data on the basis of a magnetic field of the earth acting on the magnetic field sensor.

6. Device according to one of the preceding claims, wherein the wheel unit (10a - 10d) comprises an evaluation unit (21) which is configured to sample output signals of a sensor, in particular of the acceleration sensor, of the wheel unit in order to generate sampled signals and to analyze the sampled signals in order to detect passage of the wheel through the reference limb (29).

7. Device according to Claim 6, wherein the wheel unit (10a - 10d) is configured to transmit the data essentially at a time at which the wheel passes through the reference limb (29), or to acquire the time at which the wheel passes through the reference limb (29) and to transmit the acquired time within the scope of the data.

8. Device according to one of the preceding claims, wherein the measuring device has a rotational element of an ABS sensor which rotates synchronously with the wheel.

9. Method for determining an absolute angular position of a wheel of a vehicle, comprising the steps

- (a) acquiring data (S1) which permit a reference limb of the wheel to be determined, by means of a wheel unit which can be mounted on the wheel side,
- (b) wireless transmission (S2) of the acquired data from the wheel unit to a receiver unit which can be mounted on the vehicle side,
- (c) determining the reference limb (S3) of the wheel on the basis of the transmitted data,
- (d) generating in each case one signal when the wheel rotates by a previously determined angle (S4),
- (e) counting the generated signals (S5) and
- (f) determining an absolute angular position of the wheel (S6) on the basis of the counted generated signals and the determined reference limb.

10. Method according to Claim 9, wherein the steps (a) to (c) are carried out when a speed of the vehicle changes from a value below a previously determined limiting value (V2) to a value above the limiting value (V2).

**Revendications**

1. Dispositif (9) pour la détermination d'une position angulaire absolue d'une roue (11a - 11d) d'un véhicule, comprenant

- une unité de roue (10a - 10d) pouvant être montée sur les roues, conçue pour déterminer des données qui permettent une détermination d'un bras de référence (29) de la roue, et pour transmettre les données déterminées sans fil,
- une unité de réception (12) pouvant être montée sur le véhicule, pour recevoir les données de l'unité de roue,
- un dispositif de mesure (16a - 16d) côté véhicule pour générer un signal respectif lorsque la roue tourne d'un angle prédéterminé,
- un dispositif de comptage (18) pour compter les signaux générés par le dispositif de mesure, **caractérisé en ce que**
- un dispositif de détermination (14) d'un bras de référence pour déterminer le bras de référence de la roue sur la base des données reçues ; et
- un dispositif de détermination d'angle (19) pour déterminer une position angulaire absolue de la roue, sur la base des signaux comptés par le dispositif de comptage (18) et du bras de référence déterminé, dans lequel le dispositif de comptage (18), le dispositif de détermination de bras de référence (14) et le dispositif de détermination d'angle (19) font partie d'un système électronique de véhicule (15).

2. Dispositif selon la revendication 1, dans lequel le dispositif est conçu pour recevoir ou détecter des données relatives à une vitesse du véhicule, et le dispositif de détermination de bras de référence (14) est conçu pour déterminer le bras de référence de la roue lorsque la vitesse passe d'une valeur inférieure à une valeur limite prédéterminée (V2) à une valeur supérieure à la valeur limite (V2).

3. Dispositif selon la revendication 1 ou 2, dans lequel l'unité de roue (10a - 10d) comprend un capteur d'accélération (22) et est conçue pour déterminer les données sur la base

- d'une gravité terrestre agissant sur le capteur d'accélération,
- d'une accélération qui se produit lors de l'entrée du capteur d'accélération dans un lest de la roue ou
- d'une accélération qui se produit lors de la sortie du capteur d'accélération hors d'un lest de la roue.

4. Dispositif selon la revendication 1 ou 2, dans lequel l'unité de roue (10a - 10d) comprend un élément piézoélectrique et est conçue pour déterminer les données sur la base

- d'une modification de la flexion de l'élément piézoélectrique qui se produit lors de l'entrée de l'élément piézoélectrique dans un lest de la roue ou
- d'une modification de la flexion de l'élément piézoélectrique qui se produit lors de la sortie du capteur d'accélération hors d'un lest de la roue.

5. Dispositif selon la revendication 1 ou 2, dans lequel l'unité de roue (10a-10d) comprend un capteur de champ magnétique et est conçue pour déterminer les données sur la base d'un champ magnétique terrestre agissant sur le capteur de champ magnétique.

6. Dispositif selon l'une des revendications précédentes, dans lequel l'unité de roue (10a-10d) comprend une unité d'évaluation (21) conçue pour échantillonner des signaux de sortie d'un capteur, en particulier du capteur d'accélération, de l'unité de roue, afin de produire des signaux échantillonnés, et pour analyser les signaux échantillonnés afin de détecter un passage de la roue à travers le bras de référence (29).

7. Dispositif selon la revendication 6, dans lequel l'unité de roue (10a-10d) est conçue pour transmettre les données sensiblement à un instant où la roue passe à travers le bras de référence (29) ou pour déterminer l'instant où la roue passe à travers le bras de référence (29) et pour transmettre l'instant déterminé dans la trame de données.

8. Dispositif selon l'une des revendications précédentes, dans lequel le dispositif de mesure comporte un élément tournant d'un capteur ABS qui tourne en synchronisme avec la roue.

9. Procédé pour la détermination d'une position angulaire absolue d'une roue d'un véhicule, comprenant les étapes consistant à

- (a) déterminer des données (S1) qui permettent une détermination d'un bras de référence de la roue par une unité de roue pouvant être montée sur la roue,
- (b) transmettre sans fil (S2) des données déterminées de l'unité de roue à une unité de réception pouvant être montée sur le véhicule,
- (c) déterminer le bras de référence (S3) de la roue sur la base des données transmises,
- (d) générer un signal respectif lors d'une rotation de la roue d'un angle prédéterminé (S4),
- (e) compter les signaux générés (S5) et

- (f) déterminer une position angulaire absolue de la roue (S6) sur la base des signaux générés comptés et du bras de référence déterminé.

10. Procédé selon la revendication 9, dans lequel les étapes (a) à (c) sont exécutées lorsqu'une vitesse du véhicule passe d'une valeur inférieure à une valeur limite prédéterminée (V2) à une valeur supérieure à la valeur limite (V2).

FIG 1

FIG 2

## FIG 3

## FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4141958 A1
- DE 19721488 A1
- DE 102004053696 A1
- WO 2009070065 A1
- EP 1052119 A1
- US 7075459 B1
- EP 1923669 A1
- DE 102008049046 A1